**Europäisches Patentamt**

**European Patent Office**

**Office européen des brevets**

(19)

(11) Numéro de publication: **0 216 647**
**B1**

(12) # FASCICULE DE BREVET EUROPEEN

(45) Date de publication du fascicule du brevet:
**25.01.89**

(51) Int. Cl.⁴: **F01L 13/00**, F02D 13/06

(21) Numéro de dépôt: **86401641.5**

(22) Date de dépôt: **22.07.86**

(54) **Dispositif de commande de soupapes d'un moteur à combustion interne par culbuteurs désactivables.**

(30) Priorité: **05.08.85 FR 8511955**

(43) Date de publication de la demande:
**01.04.87 Bulletin 87/14**

(45) Mention de la délivrance du brevet:
**25.01.89 Buiietin 89/4**

(84) Etats contractants désignés:
**DE GB IT**

(56) Documents cités:
**EP-A- 0 040 121**
**DE-A- 753 829**
**DE-A- 3 119 133**
**US-A- 4 174 683**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Laine, Gabriel, 2 allée de Savoie, F-78570 Andresy(FR)**

(74) Mandataire: **Moncheny, Michel et al, c/o Cabinet Lavoix 2 Place d'Estienne d'Orves, F-75441 Paris Cedex 09(FR)**

ACTORUM AG

## Description

L'invention est relative à un dispositif d'actionnement de plusieurs soupapes d'un moteur à combustion interne, comportent pour chaque soupape un culbuteur désactivable c'est-à-dire propre à être placé alternativement dans un état actif où son basculement dû à une came provoque le va-et-vient de la soupape, ou dans un état désactivé où son basculement ne provoque plus ledit va-et-vient.

Certains moyens de désactivation consistent à réaliser chacun desdits culbuteurs en deux parties alternativement séparées ou reliées par des éléments d'accouplement, notamment à crabotage par coulissement sur l'axe du culbuteur.

Un tel dispositif est décrit dans le EP-A 0 040 121. Chaque culbuteur comporte deux tronçons juxtaposés ayant des moyens d'accouplement destinés à coopérer entre eux pour l'actionnement de la soupape, soumis à un ressort tendant à écarter les moyens d'accouplement et de butée respectifs. Le premier tronçon est en appui sur la came et le second tronçon sur la tige de soupape et monté librement rotatif sur l'axe commun des culbuteurs.

Ces dispositifs sont cependant délicats à réaliser et d'une fiabilité douteuse, en particulier à cause des importantes contraintes auxquelles ils sont soumis du fait de la vitesse relativement élevée d'oscillation des culbuteurs.

Dans d'autres dispositifs connus, les culbuteurs pivotent sur des portions excentrées d'un axe qu'il suffit de faire tourner d'une fraction d'un tour pour faire passer chaque culbuteur d'un état actif à un état inactif ou inversement. Ce moyen est simple mais le passage à l'état actif s'accompagne généralement de chocs néfastes dus à la remise en action d'au moins l'un des culbuteurs dans une période correspondant à l'entraînement de la soupape, c'est-à-dire à la coopération du culbuteur avec le lobe de la came associée.

L'invention a pour but de réaliser un dispositif de commande de soupapes d'un moteur à combustion interne comportant, pour chacune des soupapes, un culbuteur en deux parties actionné par une came et susceptible de commander le mouvement de la soupape ou au contraire d'être désactivé, suivant la valeur d'un paramètre de fonctionnement du moteur, l'ensemble des culbuteurs étant monté oscillant sur un axe commun et chaque culbuteur comportant deux tronçons juxtaposés ayant des moyens de butée destinés à coopérer entre eux pour l'actionnement de la soupape, soumis à un ressort tendant à écarter leurs moyens de butée respectifs, le premier tronçon étant en appui sur la came et le second tronçon étant en appui sur la tige de la soupape et monté librement rotatif sur l'axe commun, dispositif qui ait une grande fiabilité d'actionnement des soupapes et qui comporte des culbuteurs désactivables dont la remise en action s'effectue sans chocs.

Dans ce but, le premier tronçon est monté librement rotatif sur une bague excentrée portée par l'axe commun et accouplée à cet axe, en rotation, par l'intermédiaire d'un ressort d'armement, et la rotation de l'axe commun entre une première et une seconde positions angulaires, en fonction de la valeur du paramètre de fonctionnement du moteur, dans un sens ou dans l'autre, entraîne la rotation de la bague excentrée qui comporte deux faces d'appui sur des pièces fixes respectives, pour placer cette bague dans l'une ou l'autre de deux positions stables correspondant chacune à l'appui d'une face de la bague sur la partie fixe correspondante, de façon que le premier tronçon du culbuteur soit placé, soit dans un état actif où ses moyens de butée sont en contact avec ceux du second tronçon, soit dans un état désactivé où ses moyens de butée restent constamment écartés des moyens de butée du second tronçon.

– la Fig. 1 est une vue en coupe axiale d'une partie du dispositif,
– la Fig. 2 en est une vue de dessus,
– les Fig. 3 et 4 sont des vues an coupe suivant la ligne III–III de la Fig. 2, respectivement en position active et en position désactivée d'un culbuteur.

On voit sur les figures, monté oscillant sur un axe tubulaire 1 parallèle à un arbre à cames 2, l'un 3 de plusieurs culbuteurs propres à actionner chacun une soupape 4 d'admission d'un moteur à combustion interne. L'axe 1 est porté par des chapeaux de palier 5 qui maintiennent, de façon classique non représentée, l'arbre 2 sur une culasse du moteur.

Le culbuteur comprend deux tronçons juxtaposés 6, 7: le premier 6 coopère par une extrémité 8 avec l'une 9 des cames de l'arbre 2 et oscille sur une bague excentrée 10 montée libre sur l'axe 1; le second tronçon 7 coopère par une extrémité 11 avec la face extrême 12 de la soupape associée 4 et oscille directement sur l'axe 1.

Les deux tronçons 6, 7 sont munis de moyens de butée rotative 13, formés par un bossage 14 du tronçon 6 et une zone radiale 15 du tronçon 7, propres à assurer leur solidarisation en rotation dans le sens d'entraînement de la soupape. Ils sont par ailleurs reliés par un ressort circulaire 16 entourant un épaulement 17 de la bague 10 et tendant à faire tourner les deux tronçons l'un par rapport à l'autre, autour de l'axe 1, de manière à écarter le bossage 14 de la zone 15. A cet effet, le ressort 16 comporte deux extrémités radiales 18, 19 engagées respectivement dans des embrèvements appropriés du tronçon 6 et du tronçon 7.

La bague excentrée 10 est accouplée à l'axe 1 par l'intermédiaire d'un ressort 20 enroulé autour de l'axe. Le ressort comporte à cet effet deux extrémités parallèles à l'axe 2 engagées respectivement dans deux embrèvements pratiqués l'un dans le tronçon 6 et l'autre dans une douille 23 ancrée à l'axe 1 par une goupille 24.

La bague 10 est pourvue de deux saillies 25, 26 propres à buter respectivement et alternativement sur deux pièces fixes 27, 28 solidaires de la culasse, soit directement par une face sensiblement radiale 29, soit par l'intermédiaire d'une vis de réglage 30 fixée à la bague de manière que sa face extrême d'appui 30a bute sur la pièce fixe associée 28.

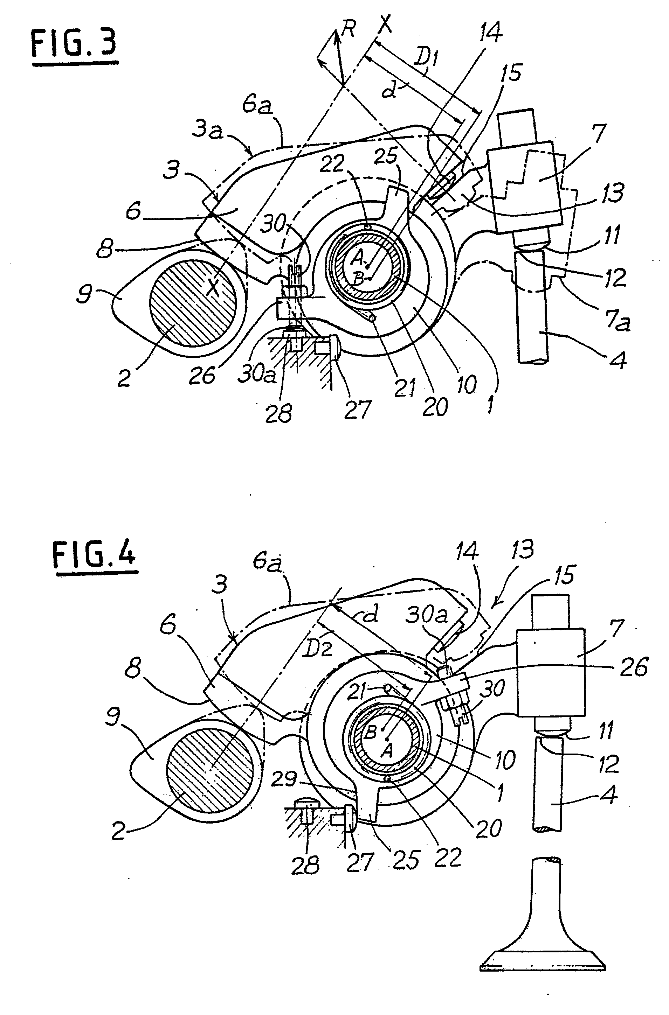

La face d'appui 30a est située, par rapport à l'alésage de la bague excentrée 10, de manière telle que lorsqu'elle bute sur la pièce fixe 28 (Fig. 3), le bossage 14 du tronçon 6 est maintenu en contact sur la zone 15 du tronçon 7, l'axe géométrique B de la bague se trouvant alors, par rapport à celui A de l'alésage donc de l'axe 1, en direction sensiblement opposée de celle de la résultante R des forces appliquées au tronçon 6 par la came 9 et par le second tronçon au droit du bossage 14. De plus, l'axe B est alors notablement plus éloigné (distance D1) de la ligne XX d'action de la came 9 sur le culbuteur que l'axe A (distance d), de sorte que la poussée, correspondant à la résultante R, du premier tronçon sur la bague 10 tend à faire pivoter la bague dans le sens assurant l'appui de la face 30a sur la pièce fixe 28.

La face d'appui 29 est située, par rapport à l'alésage de la bague 10, de manière telle que lorsqu'elle bute sur la pièce fixe 27 (Fig. 4), le bossage 14 du tronçon 6 est maintenu écarté de la zone 15 du tronçon 7, l'axe géométrique B de la bague 10 se trouvant alors notablement plus près (distance D2) de la ligne XX que l'axe géométrique A (distance d), de sorte que la poussée du tronçon 6, correspondant à la force de la came sur le culbuteur, sur la bague 10 tend à faire tourner celle-ci dans le sens assurant l'appui de la face 29 sur la pièce 27.

L'axe 1 est mobile en rotation et actionné par des moyens de commande non représentés, dépendant par exemple d'au moins un paramètre du moteur, tel que sa vitesse en rotation, de manière à être placé alternativement dans l'une ou l'autre de deux positions angulaires.

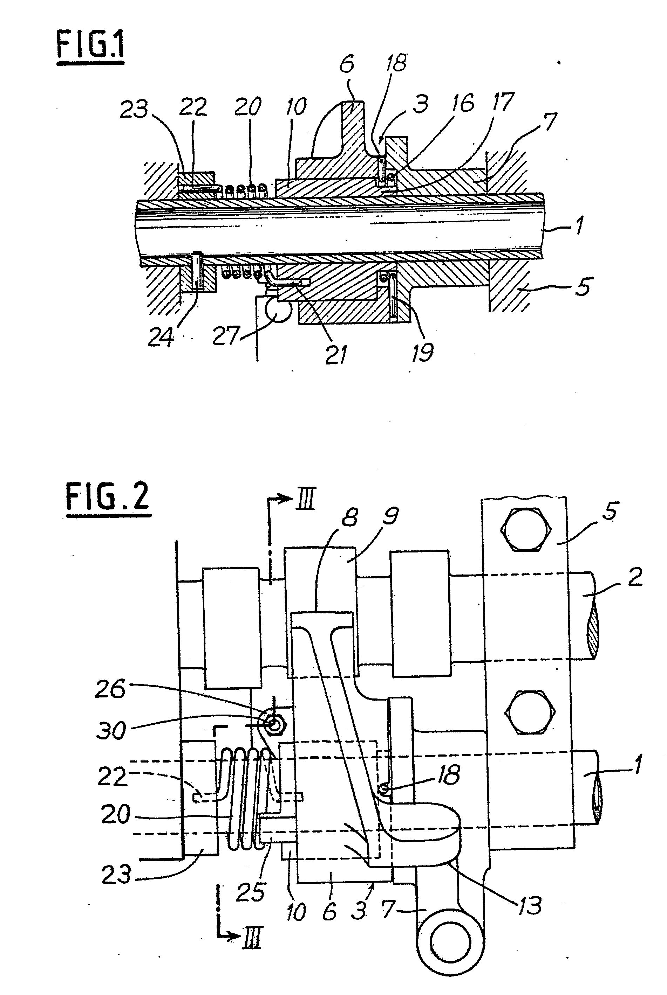

A la première de ces deux positions correspondent les Fig. 1 à 3, où l'extrémité 22 du ressort 20 est située à la partie supérieure, et où la face 30a de la vis 30 bute sur la pièce fixe 28; les moyens de butée 13 étant alors, comme indiqué plus haut, maintenus en contact, ils assurent la solidarisation angulaire entre les deux tronçons 6, 7 dans le sens de l'entraînement de la soupape: le culbuteur 3 est donc dans un état actif où son oscillation d'une position 3, 6, 7 à une position 3a, 6a, 7a provoque classiquement le va-et-vient de la soupape 4.

Quand l'axe 1 est amené à sa deuxième position angulaire, où l'extrémité 22 est située à la partie inférieure, en le tournant d'un demi-tour environ dans le sens des aiguilles d'une montre suivant les Fig. 3 et 4, le ressort 20 entraîne en rotation dans le même sens la bague excentrée 10 jusqu'à sa position représentée à la Fig. 4 où la face 29 coopère avec la pièce fixe 27; les moyens de butée 13 étant alors, comme indiqué plus haut, maintenus écartés, le culbuteur est désactivé car seul son premier tronçon 6 oscille de la position 6 à la position 6a.

Quand l'axe 1 est ramené de sa deuxième position à la première, en le faisant tourner d'un demi-tour environ en sens inverse du précédent, l'extrémité 22 du ressort 20 reprend sa position supérieure et ce dernier entraîne la bague excentrée dans sa position représentée à la Fig. 3.

Le ressort 20 se comporte en fait comme un ressort d'armement car dans le cas où le mouvement de l'axe 1 s'effectue dans une période correspondant à l'entraînement de la soupape 4 par le culbuteur, c'est-à-dire à l'appui du lobe de la came 9 sur l'extrémité 8 du tronçon 6, de notables contraintes appliquées aux diverses pièces mobiles du mécanisme peuvent engendrer des frottements s'opposant à la rotation de la bague excentrée. En ce cas, le ressort 20 se déforme élastiquement et ne reprend sa forme en entraînant la bague que très légèrement plus tard, et notamment quand le lobe de la came ne coopère plus avec le culbuteur. Il s'ensuit que l'effort de commande exercé sur l'axe 1 est relativement faible et que le passage d'un état à l'autre du culbuteur s'effectue avec un minimum de choc donc de bruit et d'usure.

Cet agencement, peu encombrant et d'un montage aisé, est particulièrement approprié à un moteur à plusieurs cylindres comportant une rangée de culbuteurs portés par un même axe: cet axe est alors aménagé comme l'axe 1 susmentionné, monté rotatif et actionné par un moyen de commande de désactivation, et chacun des culbuteurs dont la désactivation est souhaitable est réalisé comme le culbuteur 3 ci-dessus, et accouplé à l'axe par un ressort d'armement.

## Revendications

1. Dispositif de commande de soupapes d'un moteur à combustion interne comportant, pour chacune des soupapes (4), un culbuteur (3) en deux parties actionné par une came (9) et susceptible de commander le mouvement de la soupape ou au contraire d'être désactivé, suivant la valeur d'un paramètre de fonctionnement du moteur, l'ensemble des culbuteurs étant monté oscillant sur un axe commun (1) et chaque culbuteur comportant deux tronçons (6, 7) juxtaposés ayant des moyens de butée (14, 15) destinés à coopérer entre eux pour l'actionnement de la soupape, soumis à un ressort (16) tendant à écarter leurs moyens de butée (14, 15) respectifs, le premier tronçon (6) étant en appui sur la came (9) et le second tronçon (7) étant en appui sur la tige de la soupape (4) et monté librement rotatif sur l'axe commun (1), caractérisé par le fait que le premier tronçon est monté librement rotatif sur une bague excentrée (10) portée par l'axe commun (1) et accouplée à cet axe, en rotation, par l'intermédiaire d'un ressort d'armement (20), et que la rotation de l'axe commun (1) entre une première et une seconde positions angulaires, en fonction de la valeur du paramètre de fonctionnement du moteur, dans un sens ou dans l'autre, entraîne la rotation de la bague excentrée (10) qui comporte deux faces d'appui (29, 30) sur des pièces fixes (27, 28) respectives, pour placer cette bague (10) dans l'une ou l'autre de deux positions stables correspondant chacune à l'appui d'une face de la bague (10) sur la partie fixe correspondante, de façon que le premier tronçon (6) du culbuteur soit placé, soit dans un état actif où ses moyens de butée (14) sont en contact avec ceux (15) du second tronçon (7), soit dans un état désactivé où ses moyens de butée (14) restent constamment écartés des moyens de butée (15) du second tronçon (7).

2. Dispositif de commande suivant la revendication 1, caractérisé par le fait que l'une au moins (30a) des faces d'appui de la bague excentrée (10) a une position réglable grâce à une vis (30).

3. Dispositif de commande suivant l'une quelconque des revendications 1 et 2, caractérisé par le fait que la bague excentrée (10), dans sa position stable pour laquelle les moyens de butée (14, 15) des deux tronçons de culbuteur sont en contact, a son axe géométrique situé, par rapport à celui de l'axe commun (1), dans une direction sensiblement opposée à celle de la résultante des forces appliquées au premier tronçon (6) par la came (9) et par le second tronçon (7), l'axe géométrique de la bague excentrée (10) étant, dans cette position, à une distance de la ligne d'action de la came (9) sur le culbuteur (3) telle que la poussée du premier tronçon (6) sur la bague excentrée (10) tende à la faire tourner dans le sens assurant le contact de sa face d'appui (30a) qui est alors en butée sur la partie fixe correspondante (28).

4. Dispositif de commande suivant l'une quelconque des revendications 1, 2 et 3, caractérisé par le fait que la bague excentrée (10), dans sa position stable pour laquelle les moyens de butée (14, 15) des deux tronçons de culbuteur restent constamment écartés, a son axe géométrique situé plus près de la ligne d'action de la came (9) sur le culbuteur (3) que l'axe géométrique de l'axe commun (1), la poussée du premier tronçon (6) sur la bague excentrée (10) tendant alors à faire tourner la bague excentrée (10) dans le sens assurant le contact de sa face d'appui (29) qui est alors en butée sur la partie fixe (27) correspondante.

**Patentansprüche**

1. Vorrichtung zur Betätigung von Ventilen eines Verbrennungsmotors, die für jedes der Ventile (4) einen Ventilschwinghebel (3) aus zwei Teilen aufweist, der durch einen Nocken (9) betätigt wird und geeignet ist, die Bewegung des Ventils zu steuern oder im Gegensatz nicht aktiviert zu sein, gemäß dem Wert eines Betriebsparameters des Motors, wobei die Gesamtheit der Ventilschwinghebel oszillierend auf einer gemeinsamen Achse (1) angeordnet sind und jeder Ventilschwinghebel zwei benachbart angeordnete Endstücke (6, 7) aufweist, die Anschlagmittel (14, 15) aufweisen, die dazu bestimmt sind, miteinander für die Betätigung des Ventils zusammenzuwirken, beaufschlagt von einer Feder (16), die versucht, ihre Anschlagmittel (14 bzw. 15) auseinanderzugrängen, wobei das erste Endstück (6) in Anschlag mit dem Nocken (9) und das zweite Endstück (7) in Anschlag mit dem Schaft des Ventils (4) ist, und frei drehbar auf der gemeinsamen Achse (1) angeordnet ist, dadurch gekennzeichnet, daß das erste Endstück frei drehbar auf einem exzentrischen Ring (10) angeordnet ist, der von der gemeinsamen Achse (1) getragen und mit dieser Achse mittels einer Verstärkungsfeder (20) drehgekoppelt ist, und daß die Drehung der gemeinsamen Achse (1) zwischen einer ersten und einer zweiten Winkelstellung in Abhängigkeit des Parameterwerts des Motorbetriebs in die eine oder die andere Richtung die Drehung des exzentrischen Ringes (10) mitnimmt, der zwei Anschlagflächen (29, 30) auf die entsprechenden festen Stücke (27, 28) aufweist, um den Ring (10) in die eine oder die andere der beiden stabilen Stellungen zu plazieren, wobei jede dem Anschlag einer Fläche des Rings (10) an den entsprechenden festen Bereich derart entspricht, daß das erste Endstück (6) des Ventilschwinghebels entweder in einen aktiven Zustand, wo die Anschlagmittel (14) in Berührung sind mit jenen (15) des zweiten Endstücks (7) oder in einen nichtaktiven Zustand gesetzt sind, wo seine Anschlagmittel (14) stets getrennt von den Anschlagmitteln (15) des zweiten Endstücks (7) verbleiben.

2. Betätigungsvorrichtung nach Anspruch 1, dadurch gekennzeichnet, daß wenigstens eine (30a) der Anschlagflächen des exzentrischen Ringes (10) eine dank einer Schraube (30) einstellbare Stellung aufweist.

3. Betätigungsvorrichtung nach Anspruch 1 oder 2, dadurch gekennzeichnet, daß der exzentrische Ring (10) in seiner stabilen Position, für die die Anschlagmittel (14, 15) der beiden Endstücke des Ventilschwinghebels in Kontakt sind, seine Achse bezüglich der gemeinsamen Achse (1) in einer Richtung im wesentlichen entgegen jener der resultierenden der Kräfte geometrisch angeordnet hat, die durch den Nocken (9) auf das erste Endstück (6) und durch das zweite Endstück (7) aufgebracht werden, wobei die geometrische Achse des konzentrischen Ringes (10) in dieser Stellung einen Abstand zu der Betätigungslinie des Nockens (9) auf den Ventilschwinghebel (3) derart aufweist, daß das Anstoßen des ersten Endstücks (6) an dem exzentrischen Ring (10) dazu tendiert, ihn in die Richtung zu drehen, die den Kontakt seiner Stützfläche (30a) sicherstellt, die somit in Anschlag an dem entsprechenden festen Bereich (28) ist.

4. Betätigungsvorrichtung nach einem der Ansprüche 1, 2 oder 3, dadurch gekennzeichnet, daß der exzentrische Ring (10) in seiner stabilen Lage für die die Anschlagmittel (14, 15) der beiden Endstücke des Ventilschwinghebels stets auseinandergespreizt bleiben, seine geometrische Achse näher an der Wirkungslinie des Nockens (9) auf den Ventilschwinghebel (3) hat als die geometrische Achse der gemeinsamen Achse (1), wobei das Anstoßen des ersten Endstücks (6) an dem exzentrischen Ring (10) dazu tendiert, den exzentrischen Ring (10) in die Richtung zu drehen, die den Kontakt mit seiner Stützfläche (29) sicherstellt, die somit in Anschlag an den entsprechenden festen Bereichen (27) ist.

**Claims**

1. Valve control device for an internal combustion engine possessing, for each of the valves (4), a rocker arm (3) in two parts which is actuated by a cam (9) and is capable of controlling the movement of the valve, or alternatively of being deactivated, depending on the value of an operating parameter of the engine, all the rocker arms being mounted to oscillate on a common shaft (1) and each rocker arm possessing two juxtaposed sections (6, 7) having stop means (14, 15) intended to interact mutually for actuation of the valve, subjected to a spring (16) which tends to force apart the respective stop means (14, 15) thereof, the first section (6) bearing on the cam (9) and the second section (7) bearing on the valve stem (4) and being mounted to rotate freely about the common shaft (1), characterized in that the first section is mounted to rotate freely on an eccentric ring (10) mounted on the common shaft (1) and coupled to the said shaft, rotatably, by means of a loading spring (20), and in that the rotation of the common shaft (1) between a first and a second angular position, as a function of the value of the operating parameter of the engine, in one direction or the other, entrains the rotation of the eccentric ring (10) which possesses two bearing surfaces (29, 30) on respective fixed pieces (27, 28) in order to position this ring (10) in one or other of two stable positions each corresponding to the bearing of one surface of the ring (10) on the corresponding fixed part, in a manner such that the first section (6) of the rocker arm is positioned either in an active state where its stop means (14) are in contact with those (15) of the second section (7), or in a deactivated state where its stop means (14) remain constantly at a distance from the stop means (15) of the second section (7).

2. Control device according to Claim 1, characterized in that at least one (30a) of the bearing surfaces of the eccentric ring (10) has a position which can be adjusted by means of a screw (30).

3. Control device according to either of Claims 1 and 2, characterized in that the eccentric ring (10), in its stable position wherein the stop means (14, 15) of the two rocker-arm sections are in contact, has its geometric axis situated, relative to the axis of the common shaft (1), in a direction substantially opposite to that of the resultant of the forces applied to the first section (6) by the cam (9) and by the second section (7), the geometric axis of the eccentric ring (10) being, in this position, at a distance from the line of action of the cam (9) on the rocker arm (3) such that the thrust of the first section (6) on the eccentric ring (10) tends to cause the said ring to rotate in the direction which ensures the contact of its bearing surface (30a) which is then stopped against the corresponding fixed part (28).

4. Control device according to any one of Claims 1, 2 and 3 characterized in that the eccentric ring (10), in its stable position wherein the stop means (14, 15) of the two rocker-arm sections remain at a constant distance apart, has its geometric axis located closer to the line of action of cam (9) on the rocker arm (3) than the geometric axis of the common shaft (1), the thrust of the first section (6) on the eccentric ring (10) then tending to cause the eccentric ring (10) to rotate in the direction which ensures the contact of its bearing surface (29) which is then stopped on the corresponding fixed part (27).

# FIG.1

# FIG.2

FIG.3

FIG.4